# EUROPÄISCHE PATENTSCHRIFT

(11) **EP 2 647 289 B1**
(45) Veröffentlichungstag und Bekanntmachung des Hinweises auf die Patenterteilung: **04.10.2017**
(21) Anmeldenummer: 12163292.1
(22) Anmeldetag: 05.04.2012
(51) Int. Cl.: A21C 3/02

(54) **Verfahren und System zum Überlappen, Falten und/oder Schichten eines Teigbandes**
Method and Device for overlapping, folding and/or undulating a strip of dough
Procédé et Système de superposition, pliage et/ou empilement d'une bande de pâte

(43) Veröffentlichungstag der Anmeldung: 09.10.2013
(73) Patentinhaber: Fritsch GmbH, 97348 Markt Einersheim (DE)
(72) Erfinder: Münzer, Oskar Dipl. Ing., 97350 Mainbernheim (DE); Kruse, Michael Dipl. Ing., 97318 Biebelried OT Kaltensondheim (DE); Dorner, Fred Dipl. Ing., 97318 Kitzingen (DE)
(74) Vertreter: Götz, Georg Alois

(56) Entgegenhaltungen:
- EP-A2- 2 225 943
- CA-A- 365 871
- GB-A- 491 820
- US-A- 3 851 088

## Beschreibung

Die Erfindung betrifft ein Verfahren zum Überlappen, Falten und/oder Schichten eines Teigbandes, indem dieses von einer Zuführeinrichtung über deren Ausgang durch einen Faltkanal auf wenigstens eine Ablage gelegt wird. Dazu wird ein Ausgang des Faltkanals über die Ablage hin- und hergehend geführt, wobei das Teigband sich zumindest teilweise auf der Ablage überlappt. Der Abstand zwischen dem Faltkanal-Ausgang und der Ablage wird konstant gehalten.

Ferner betrifft die Erfindung eine Anordnung zum Überlappen, Falten und/oder Schichten eines Teigbandes, die insbesondere zur Durchführung des genannten Verfahrens geeignet ist. Die Anordnung umfasst eine Teigband-Zuführeinrichtung, deren Ausgang einem Eingang eines Faltkanals gegenüberliegt oder sonst zugeordnet ist. Der Ausgang des Faltkanals befindet sich über der Ablage für das zu überlappende, zu faltende oder zu schichtende Teigband und ist mit einer Faltkanal-Ausgangsführung gekoppelt, über welche der Faltkanalausgang mit konstantem Abstand zur Ablage hin und her bewegt wird oder hin- und herbewegbar ist.

Bekannte Faltanlagen dienen zur Herstellung von Teig-/Fettschichten bzw. laminierten Teigen für beispielsweise Blätter- und Plunderteig. Sie sind üblicherweise nach einem an sich bekannten Walzwerk angeordnet, der der Reduzierung der Dicke eines Teigbandes dient. Die Faltanlage weist einen Faltkanal auf, durch den das Teigband hindurch befördert wird. Der Ausgang des im Eingangsbereich gelenkig angebrachten Faltkanalausgangs wird kontinuierlichen Schwenkbewegungen unterworfen, wobei das aus dem Faltkanal auslaufende Teigband nach Durchlaufen einer kreisartig gekrümmten Schwenkbahn am Faltkanalausgang auf einem darunter angeordneten Ablage-Förderband gefaltet wird. Durch die Wahl der Fördergeschwindigkeit des Ablage-Förderbandes lässt sich die Zahl der Faltungen pro Teigbandlänge erniedrigen oder erhöhen. Der Weitertransport des Teigbandes erfolgt bekanntlich rechtwinklig zur Faltanlage. Auf der Ablage-Oberfläche ergeben sich dabei Teigbandbereiche mit Zickzack- oder dreieckförmigen Ablagebildern bzw. -konturen, wenn die Ablage ein sich in eine Abtransportrichtung bewegendes Förderband umfasst, und der Faltkanal-Ausgang in einer Richtung quer zur Ablage-Abtransportrichtung hin- und hergeschwenkt wird. Faltanlagen etwa dieser Art sind in US 4 004 035, JP 54-70488 und JP 54-11988 beschrieben.

Da bei diesen vorbekannten Faltanlagen der Faltkanal über der Ablage hin- und hergeschwenkt wird, bewegt sich sein Ausgang längs einer bogen- oder kreisartig gekrümmten Bahn, wobei sich der Abstand des Faltkanalausgangs zur Ablageoberfläche periodisch verkürzt und verlängert. Wird noch, wie es wünschenswert ist, das Teigband mit konstanter Geschwindigkeit zugeführt, ergibt sich im Zuge der wiederholten Abstandsvergrößerung des Faltkanalausgangs zur Ablage eine wiederholte, unerwünschte Teigbanddehnung.

Zur Abhilfe wird in der EP 2 225 943 A2 vorgeschlagen, dem Faltkanaleingang ein spezielles Zuführ-Förderband vorzuschalten, welches im Eingangsbereich so angelenkt ist, dass es mit seinem am Faltkanaleingang angrenzenden Ausgang in einer vertikalen Ebene auf- und abschwenkbar ist. Der Faltkanal ist an seinem Ausgang linear und parallel zur Ablage-Oberfläche so geführt, dass ein konstanter Abstand zwischen dem Faltkanalausgang und der Ablageoberfläche eingehalten wird. An seinem Eingangsbereich ist der Faltkanal mit dem Ausgangsbereich des vertikal schwenkbaren Zuführ-Förderbandes gelenkig gekoppelt, so dass der Faltkanaleingang entsprechend den Auf- und Abbewegungen des Ausgangs des Zuführförderbandes schwenken kann. Damit soll erreicht werden, dass vom Eingang des schwenkbaren Zuführ-Förderbandes bis zur Oberfläche der Teigband-Ablage die Teigbandlänge konstant gehalten wird, und Dehnungen bzw. Zugspannungen im Teigband vermieden werden.

Allerdings muss sich entsprechend der EP 2 225 943 A2 das vertikal schwenkbare Zuführ-Förderband etwa auf gleicher Höhe wie der Faltkanaleingang liegen, der funktionsbedingt einen deutlichen Höhenunterschied zur Teigbandablage-Oberfläche und in der Regel zu den sonstigen Teigverarbeitungs-Tischen entsprechend der Faltkanal-Länge aufweist. Dies erfordert die Anordnung eines separaten, nach oben führenden Steig-Förderbandes, das das Teigband nach oben zum höher gelegenen Eingang des vertikal schwenkbaren Zuführ-Förderbandes transportiert. Damit das Zuführ-Förderband mit seinem Ausgang schwenken kann, muss es vom vorgeschalteten Steig-Förderband sowohl konstruktiv als auch antriebstechnisch getrennt bzw. entkoppelt ausgeführt sein, was zusätzlichen Bauaufwand und jeweils einen separaten Antriebsmotor für das Steig- und das Zuführ-Förderband erfordert.

Aus der GB 491 820 A ist eine Teigfaltmaschine bekannt, bei welcher die Geschwindigkeit eines beweglichen Teigablagemittels an verschiedenen Punkten seiner Bewegung kompensiert wird. Hierdurch ist es möglich, gefaltete Teiglagen zu erhalten, in welchen keine der Lagen zu lose oder zu stark gedehnt ist, wodurch eine unerwünschte Faltenbildung oder Verdünnung des Teiges vermieden ist. Weiterhin offenbart die US 3,851,088 ein Verfahren gemäß dem Oberbegriff des Anspruchs 1 sowie eine Vorrichtung gemäß dem Oberbegriff des Anspruchs 8. Durch die Verschwenkung des Faltkanals verändert sich die Länge das Teigbandes von der Zuführeinrichtung zur Ablage, da sich der Umschlingungswinkel um die Eingangswalze des Faltkanals ändert.

Der Erfindung liegt die Aufgabe zugrunde, ein System zum Überlappen, Falten und/oder Schichten eines Teigbandes zu schaffen, bei dem der Antriebs- und Bauteileaufwand vermindert ist. Zur Lösung wird auf das im Anspruch 1 angegebene Verfahren und die im Anspruch 8 angegebene Anordnung jeweils zum Überlappen, Falten und/oder Schichten des Teigbandes verwiesen. Optionale, zweckmäßige Ausgestaltungen der Erfindung ergeben sich aus den abhängigen Ansprüchen.

Die Erfindung umfasst eine zumindest gegenüber dem Maschinenrahmen oder -fundament der Teigfaltanlage starr bzw. ortsfest gehaltene Zuführeinrichtung, die jedoch Teigband-Transport- bzw. Fördermittel aufweist. Der Abstand zwischen der Zuführeinrichtung und der Teigband-Ablage nach dem Faltkanal wird konstant gehalten, ebenso wie der Abstand zwischen dem Faltkanalausgang und der Oberfläche der Ablage für das gefaltete Teigband. Gegenüber dem bzw. relativ zum ortsfesten Ausgang der zum Faltkanal fördernden Zuführeinrichtung wird der Faltkanal zumindest mit seinem Eingang beweglich geführt. Es handelt sich um Ausgleichs- bzw. Äquivalentbewegungen des Faltkanaleingangs, welche durch das lineare Hin- und Herfahren bzw. Reversieren des Faltkanalausgangs in seiner Ausgangsführung parallel zur Ablage-Oberfläche bedingt sind. Indem sich dabei die Winkelstellung des Faltkanals von einer maximalen Schräglage über eine mittlere Vertikalstellung zu einer gegensinnigen, maximalen Schräglage und umgekehrt ständig verändert, lässt sich der Eingang des Faltkanals spezifisch und/oder gezielt zur Ausführung der Ausgleichs- oder Äquivalentbewegungen so führen, dass die Länge des Teigbandes von der Zuführeinrichtung zur Ablage konstant oder im wesentlichen konstant gehalten wird und/oder eine Dehnung und/oder Zugspannung im Teigband vermieden wird. Die Teigband-Fördergeschwindigkeit kann konstant gehalten werden.

Auf der Basis der Erfindung ist es zweckmäßig, dass ein etwaiger Weitertransport der sich dann bewegenden Teigband-Ablage rechtwinklig oder schräg zur reversierenden Hin- und Her-Linearbewegung des Faltkanalausgangs erfolgt. Im Rahmen der Erfindung kann der Faltkanal entweder als Blechkanal, worin das Teigband gleitend nach unten rutschen kann, oder als Bandkanal mit beidseitigen Förderbändern ausgeführt sein. Im letzteren Fall sind zwei parallel gegenüberliegende Förderbänder synchron angetrieben und bilden den Faltkanal bzw. Teigbanddurchgang.

Um ein zuverlässiges Anfahren des Teigband-Faltprozesses zu ermöglichen, besteht eine zweckmäßige Erfindungsausbildung darin, dass der Einlauf des Teigbandes von der Zuführeinrichtung in den Faltkanal allgemein durch Einlauf-Führungsmittel unterstützt wird. Beispielsweise sind diese zum Unter- oder Hintergreifen des Teigbandes ausgeführt. Mit solchen Führungsmitteln lässt sich gleichsam eine Brücke vom Ausgang der Zuführeinrichtung zum beabstandeten Faltkanal-Eingang bilden.

Die Einlauf-Führungsmittel können auch (noch) folgendes umfassen: Versetzen des Faltkanals oder Faltkanal-Eingangs in eine Teigband-Einführungsstellung, in welcher das Teigband vom Ausgang der Zuführeinrichtung mittels der Schwerkraft in den Faltkanal-Eingang fallen oder gelangen kann. Die Herbeiführung der Teigband-Einführstellung lässt sich noch auf der Basis der reversierenden Hin- und Herbewegung des Faltkanal-Ausgangs zwischen zwei Umkehrstellen (Totpunkte der entsprechenden Hubbewegung parallel zur Ablageoberfläche) wie folgt verfeinern: Bei Erreichen wenigstens einer der Umkehrstellen durch den Faltkanal-Ausgang wird eine Flucht zwischen dem Zuführeinrichtungs-Ausgang und dem Faltkanal-Eingang gebildet. Die Flucht ist so ausgerichtet, dass sie senkrecht oder schräg auf die Ablage-Oberfläche trifft. Der Vorteil, der mit der Realisierung der Einlauf-Führungsmittel einfach durch Herbeiführen der genannten Teigband-Einführstellung erzielt wird, besteht in der Möglichkeit der Einsparung separater, zusätzlicher Bauteile als Einführhilfe. In diesem Sinne können die Einlauf-Führungsmittel auch als Funktionalität derart realisiert sein, dass der Einlauf des Teigbandes von der Zuführ-Einrichtung in den Faltkanal unterstützt wird, indem bei Verfahrensbeginn ein Führen des Faltkanal-Eingangs in eine Stellung unmittelbar unterhalb des Zuführeinrichtungs-Ausgangs erfolgt. Insbesondere kann dabei eine vertikale Flucht vom Zuführeinrichtungs-Ausgang zum Faltkanal-Eingang gebildet werden.

Auf der Basis der Erfindung kann sich der Abstand zwischen dem Zuführeinrichtungs-Ausgang und dem Faltkanal-Eingang im laufenden Faltbetrieb vergrößern und verkleinern. Um dabei eine Beaufschlagung oder Belastung des Teigbandes mit mechanischer (Zug-)Spannung bzw. Dehnung zu vermeiden, wird nach einer Erfindungsausbildung vorgeschlagen, eine Teigbandlose bzw. einen losen Teigbandvorrat oder einen schlaffen Teigbandabschnitt zumindest zeitweise zu bilden und/oder zu speichern. Der Speicherort liegt zweckmäßig zwischen dem Ausgang der Zuführeinrichtung und dem Faltkanal-Eingang. Die Form der Teigbandlose kann ein U-artiger Durchhang bzw. ein Wellental sein. Durch die gebildete Teigbandlose sind die genannten Ausgleichs- bzw. Äquivalentbewegungen des Faltkanaleingangs insbesondere ohne Zugbelastung beziehungsweise Dehung beim Teigband ermöglicht. Ein Ziehen des Teigbands mit einhergehender Erzeugung einer Zugspannung ist vermieden. Auf der Basis des reversierenden Hin- und Herbewegens des Faltkanal-Ausgangs linear sowie parallel zur Teigband-Ablage zwischen einer ersten und einer zweiten Umkehrstelle besteht eine Erfindungsausbildung darin, dass mit Erreichen einer der Umkehrstellen die Teigbandlose, gegebenenfalls der U-artige Teigband-Durchhang bzw. die durchhängende Teigbandwelle zu einem geradlinig oder im wesentlichen oder weitgehend geradlinig vom Zuführeinrichtungsausgang zum Faltkanal-Eingang verlaufenden Teigbandabschnitt umgebildet wird.

Um eine genauere Steuerung und Regelung der Faltanlage und der übergeordneten Teigband Produktionslinie, worin die Faltanlage gegebenenfalls integriert ist, zu ermöglichen, wird nach einer vorteilhaften Erfindungsausbildung vorgeschlagen, die Länge und/oder das Ausmaß des Durchhangs des losen Teigbandvorrats sensorisch zu erfassen und zu überwachen. Dies könnte beispielsweise optoelektronisch (mittels Lichtschranken) und/oder mit bildgebenden Einrichtungen (Kameras oder dergleichen) erfolgen. Insbesondere lässt sich der Zustand der durchhängenden Teigbandlose als ein Istwert-Parameter zur Anlagensteuerung und -regelung, insbesondere der Geschwindigkeit, verwenden.

Gemäß einer vorteilhaften, konstruktiven Erfindungsausbildung wird die Faltkanal-Eingangsführung zumindest zeitweise kongruent beziehungsweise deckungsgleich zu einer Längs- oder Mittelachse des Faltkanals und/oder in dessen Verlängerung angeordnet. Dadurch wird ein kräftesymmetrische und stabile Kopplung (Eingriff) zwischen der Eingangsführung und dem Faltkanal ermöglicht.

In weiterer Konkretisierung ist die Faltkanal-Eingangsführung mit einem vorzugsweise geradlinigen Führungsstrang verwirklicht, der mittels einer Führungsspur, Führungsstange oder einer Führungsschiene realisiert sein kann. Die Führungsrichtung ist senkrecht oder schräg zur Oberfläche der Ablage ausgerichtet. Mit dem Führungsstrang steht ein Führungselement verschiebbar in Eingriff, an dem eine Dreh- oder Schwenklagerung angebracht ist. Der Faltkanal ist zweckmäßig mit dem Führungsstrang, dem Führungselement und/oder der Dreh- oder Schwenklagerung mechanisch gekoppelt.

Eine Weiterbildung dieser Erfindungsausbildung kann darin bestehen, dass der Führungsstrang ortsfest fixiert ist, während die Dreh- oder Schwenklagerung mit dem sich bewegenden Faltkanal verbunden ist. Die Kopplung erfolgt über das mit dem Führungsstrang in Eingriff stehende Führungselement, das längs des Führungsstrangs verschiebbar ist. Ferner ist der Faltkanal mit dem verschiebbaren Führungselement über die Dreh- oder Schwenklagerung gekoppelt. Eine dazu alternative Erfindungsausgestaltung besteht darin, dass die Dreh- oder Schwenklagerung bzw. eine entsprechende Gelenkstelle ortsfest fixiert sind. Darin ist dann das Führungselement drehbar gelagert. Der Führungsstrang ist am Faltkanal starr befestigt und macht so dessen Bewegungen mit. Der Führungsstrang und das Führungselement stehen gegeneinander verschiebbar in Eingriff, und der Führungsstrang ist darüber mittelbar mit der Schwenk- bzw. Drehlagerung gekoppelt.

Mit den genannten Ausbildungen der Faltkanal-Eingangsführung lässt sich eine konstruktiv einfache und flexibel variierbare Bewegungsführung verwirklichen, ohne dass der Durchsatz am Teigband durch den Faltkanal beeinträchtigt wird.

Zur Anpassung an gängige Teigverarbeitungsanlagen, insbesondere zum leichten Anschluss an vorgeordnete Teigverarbeitungsstationen (z. B. Walzwerk, Satellitenkopf oder Kalibrierwalzen) ist die Zuführeinrichtung eingangsseitig mit einem schräg und/oder rampenartig ansteigenden Steigabschnitt gestaltet, der über einen stumpfen Winkel oder Knick in den Auslauf der Zuführeinrichtung übergeht. Der Auslauf muss auf gleicher Höhe wie der Faltkanal-Eingang liegen, welcher zur Realisierung einer Fallhöhe deutlich über den Oberflächen der sonstigen Teigverarbeitungstische oder - einrichtungen liegt. Der erzielte Vorteil besteht u. a. darin, dass sich ein separates Steigförderband einsparen lässt.

Zur Herbeiführung des Faltprozesses auf der Teigband-Ablage liegt es im Rahmen der Erfindung, dass der Faltkanal und/oder der Faltkanal-Ausgang mit einem Linearantrieb gekoppelt sind, dessen Antriebsrichtung parallel zur Ablage oder zur Faltkanal-Ausgangsführung ausgerichtet ist. Eine unter lebensmittelhygienischen Gesichtspunkten besonders vorteilhafte Realisierungsmöglichkeit des Linearantriebs besteht im Einsatz eines Zahnriementriebs vorzugsweise mit schmierfreien Kunststoff-Zahnriemen. Mit dem reversierend angetriebenen Zahnriemen kann der Faltkanal bzw. der Faltkanal-Ausgang fest verbunden sein. Alternativ ist auch der Einsatz einer Gewindespindel im Rahmen eines motorisch angetriebenen Schraubgetriebes denkbar, um die translatorische Hin- und Herbewegung des Faltkanal-Ausgangs zu erzeugen. Besonders vorteilhaft wäre auf der Basis des genannten Schraubbeziehungsweise Gewindetriebs der Einsatz einer Kugelumlaufbuchse im Rahmen eines Kugelgewindetriebs, wobei Kugeln als Wälzkörper eines Wälzschraubtriebes dienen. Alternativ könnte als Antriebskoppelelement für den Faltkanalausgang auch eine Gleitbuchse im Eingriff mit einer Führungsschiene eingesetzt werden, die vom genannten Zahnriemen angetrieben wird.

Es liegt im Rahmen der Erfindung, dass die Ausgleichsbewegungen des Faltkanal-Eingangs in der Faltkanal-Eingangsführung mit dem genannten Linearantrieb synchron bzw. mechanisch gekoppelt sind oder sonst mit dem Linearantrieb in Wirkungsverbindung stehen.

Eine konstruktive oder bauliche Realisierung der oben angesprochenen Einlauf-Führungsmittel im Bereich des Zuführeinrichtungs-Ausgangs und des Faltkanal-Eingangs besteht beispielsweise in einer Rollen-Stützbahn mit einer oder mehreren Rollen. Mit diesen lässt sich das Teigband stützend unter- und/oder hintergreifen, wenn es (erstmalig) in den Faltkanal-Eingang gelangt. Zweckmäßig sind Stellmittel für die Stützbahn vorgesehen, mittels welcher diese abhängig von der Faltkanal-Stellung in Berührung mit der Teigbahn setzbar oder von dieser lösbar ist.

Weitere Einzelheiten, Merkmale, Merkmalskombinationen und Wirkungen auf der Basis der Erfindung ergeben sich aus der nachfolgenden Beschreibung bevorzugter Ausführungsbeispiele der Erfindung sowie aus den schematisch vereinfachten Zeichnungen. Diese zeigen in:
- Figur 1: ein erstes Ausführungsbeispiel einer erfindungsgemäßen Teigfaltanlage in Seitenansicht;
- Figuren 2-5: Vorderansichten der Teigverarbeitungsanlage bzw. -Anordnung nach Figur 1 in verschiedenen Stellungen;
- Figur 6: eine Vorderansicht auf ein zweites Ausführungsbeispiel der Erfindung, das gegenüber dem ersten nach Figuren 1-5 im Eingangsbereich der Zuführeinrichtung abgewandelt ist;
- Figur 7: ein drittes Ausführungsbeispiel in Seitenansicht;
- Figuren 8-10: jeweils eine Vorderansicht auf die Teigverarbeitungsanlage nach Figur 7 in verschiedenen Stellungen;
- Figuren 11-13: jeweilige Vorderansichten auf ein weiter abgewandeltes Ausführungsbeispiel einer erfindungsgemäßen Teigverarbeitungsanlage in verschiedenen Stellungen.

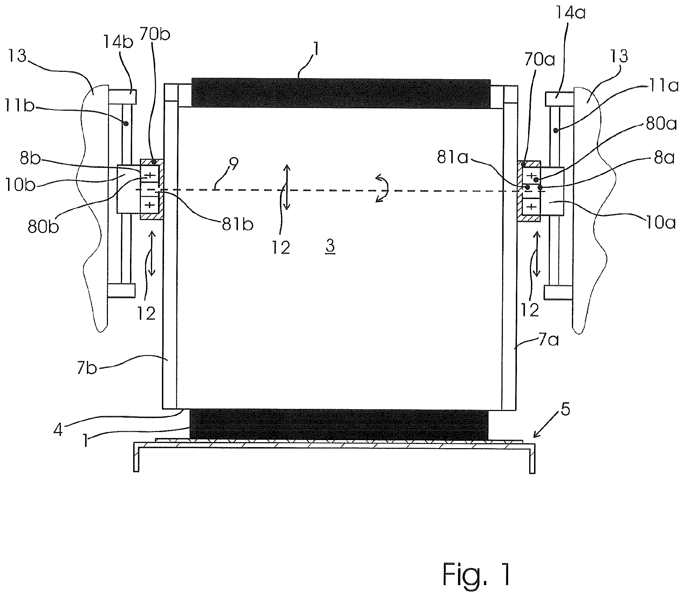

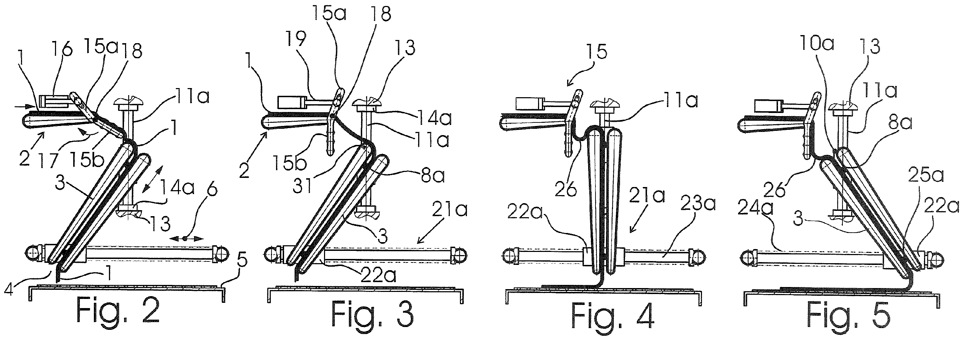

Gemäß Figur 1 wird ein Teigband 1 von einer in Figuren 2-5 dargestellten Zuführeinrichtung 2 in einen Faltkanal 3 eingebracht, dessen Teigband-Durchgang beispielsweise aus zwei gegenüberliegenden Förderbändern und/oder aus Blechwänden gebildet sein kann. Aus dem unteren Ende bzw. Ausgang 4 des Faltkanals 3 gelangt das Teigband 1 auf eine Teigband-Ablage 5. Die Faltenbildung erfolgt, indem dem Faltkanal-Ausgang 4 in Verbindung mit einer (in Fig.1 nicht gezeichneten) Linerführung mit Linearantrieb eine lineare Hin- und Herbewegung 6 (vgl. Figur 2) erteilt wird, die in Figur 1 senkrecht zur Zeichenebene verläuft. Gegebenenfalls kann die Ablage 5 (nicht gezeichnete) Fördermittel aufweisen, welche das Teigband 1 in gefaltetem Zustand üblicherweise rechtwinklig oder quer zur Hin- und Herbewegung 6 des Faltkanalausgangs 4 weiter befördern.

Gemäß Figur 1 ist der Faltkanal 3 über seine beidseitigen Rahmenteile 7a, 7b drehbar über ein jeweiliges Schwenklager 8a, 8b angebracht. Beispielsweise umfasst dazu eine an der Außenseite des jeweiligen Rahmenteils 7a,7b starr fixierte, U-artige Lageraufnahme 70a, 70b in verdrehfester Verbindung einen jeweiligen Außenring 80a,80b der beiden Schwenklager 8a,8b, beispielsweise Kugel- oder Gleitlager. Die Schwenklager 8a, 8b beziehungsweise ihre Außenringe 80a,80b sind um eine gemeinsame Schwenkachse 9 (strichpunktiert) drehbar, die senkrecht zur Hin- und Herbewegung 6 des Ausgangs 4 und zur Längsrichtung des Faltkanals 3 verläuft und einen jeweiligen, vom Außenring 80a,80b verdrehbar umgebenen Lagerzapfen 81a,81b zentrisch durchsetzt. Der die Schwenkachse 9 realisierende Lagerzapfen 81a, 81b des jeweiligen Schwenklagers 8a, 8b ist starr an einer jeweiligen Gelenkhülse 10a, 10b befestigt, welche jeweils eine zweier beidseits des Faltkanals 3 angeordneter Führungsstangen 11a, 11b, gegenüber diesen verschiebbar, umfasst. Dadurch können auch die Schwenkachse 9 beziehungsweise die beidseitigen Schwenklager 8a, 8b eine hin- und hergehende Verschiebebewegung 12 entlang den Führungsstangen 11a, 11b ausführen (vgl. Fig.2 - 5). Die beidseitigen Führungsstangen 11a, 11b sind an einem Maschinenrahmen 13 oder -fundament starr befestigt und damit ortsfest angeordnet. Der Befestigung dienen beidseits des Faltkanals 3 jeweils zwei vom Maschinenrahmen 13 deckungsgeich vorspringende, obere und untere Halter 14a, 14b, welche jeweils eine der beidseitigen Führungsstangen 11a, 11b an deren jeweiligen Stirnenden in starrer Verbindung halten.

Gemäß Figur 2 befindet sich der Faltkanal 4 in einer Einführstellung, in welcher ein Einlauf-Führungsmittel 15 mittels eines Stellorgans 16 aktiviert worden ist. Dem gelenkig angebrachten, kippbaren Einlauf-Führungsmittel 15 läßt sich mittels des Stellorgans 16, beispielsweise Pneumatikzylinder, eine auf- und abgehende Kippbewegung 17 um eine (angedeutete) Kippachse 18 erteilen, die beim Einlauf-Führungsmittel 15 einen Hebelabschnitt 15a und einen der Überbrückung des Abstands zwischen Zuführeinrichtung 2 und Faltkanal 3 dienenden Rollenabschnitt 15b voneinander abgrenzt. Im gezeichneten Beispiel ist das Stellorgan 16 als Stellzylinder mit einem aus- und einfahrbaren Kolben 19 ausgeführt, der mit seinem freien Ende am Hebelabschnitt 15a der Einlauf-Führungsmittel 15 zu dessen Verstellung angreift, um den Rollenabschnitt 15b in Überbrückungsstellung zu bringen. In der in Figur 2 gezeigten Einlauf- bzw. Einführ-Stellung des Faltkanals 4 ist der Stellkolben 19 im Stellzylinder bzw. Stellorgan 16 eingefahren, so dass das Einlauf-Führungsmittel 15 mit seinem Rollenabschnitt 15b in eine obere Stellung gekippt oder verschwenkt ist, dabei den lichten Abstand zwischen dem Ausgang der Zuführeinrichtung 2 und dem Eingang des Faltkanals 4 überbrückt und die Teigbahn bzw. das Teigband 1 untergreift.

Gemäß Figur 3 ist der Einlauf des Teigbandes 1 in den Faltkanal 4 erfolgt, und der Rollenabschnitt 15b des Einlauf-Führungsmittels 15 ist nach unten geschwenkt und vom Teigband 1 gelöst. Dazu ist der Stellkolben 19 aus dem Stellzylinder bzw. Stellorgan 16 ausgefahren, und der Hebelabschnitt 15a der Einlauf-Führungsmittel 15 um die Kippachse 18 nach oben geschwenkt.

Das Stellorgan 16 ist nicht auf die Ausführung als pneumatisch, hydraulisch oder elektromagnetisch betätigbarer Stellzylinder beschränkt. Denkbar wäre auch ein elektromotorischer Exzenterantrieb oder elektromotorischer Linearantrieb. Der Hebelabschnitt 15a könnte zu seiner manuellen Betätigung auch mit einem Handgriff ausgeführt sein.

Gemäß Figuren 2-5 ist der Faltkanal 4 an seinem Ausgang beidseitig mit einer jeweiligen Faltkanal-Ausgangsführung 21a gekoppelt, worüber der Abstand des Faltkanalausgangs zur Oberfläche der Teigband-Ablage 5 konstant gehalten wird. Die Ausgangsführung 21a kann mit einem auf dem Markt gängigen Linearführungssystem realisiert sein. Beim gezeichneten Ausführungsbeispiel umfasst die Ausgangsführung 21a eine Gelenkbuchse 22a, welche auf einer jeweiligen Ausgangs-Führungsstange 23a gleitend hin- und herverschiebbar ist, um die genannten Hin- und Herbewegungen 6 auszuführen. Zum dafür jeweils notwendigen Antrieb ist die Gelenkbuchse 22a mit einem strichpunktiert angedeuteten Zahnriementrieb 24a gekoppelt, welche ihr die reversierenden Hin- und Herbewegungen 6 erteilt. Ferner ist die Gelenkbuchse 22a mit einem Ausgangsschwenklager 25a versehen, an welchem der Faltkanal 4 mit seinem Ausgang angelenkt ist.

Anstelle der Gelenkbuchse könnte auch eine Kugelumlaufbuchse eingesetzt werden. Eine weitere Alternative für den Linearantrieb des Faltkanalausgangs könnte im Rahmen der Erfindung in einem Spindeltrieb bestehen, wobei die Gelenkbuchse 22a dann ein Innengewinde aufweisen könnte, das mit einem Außengewinde auf der Ausgangsführungsstange 23a kämmt.

In den Figuren 2-5 sind jeweils Vorderansichten dargestellt, bei denen aber die in Figur 1 an der linken Faltkanalseite im Zusammenhang mit den Bezugsziffern 7b, 8b, 10b, 11b, 14b angesprochenen Funktions- und Bauelemente der Übersichtlichkeit halber weggelassen sind. Analog sind in den Figuren 2-5 nur die mit der Faltkanal-Ausgangsführung zusammenhängenden, rechtsseitigen Funktionselemente 21a, 22a, 23a, 24a und 25a dargestellt. Die etwa auf der in Figur 1 linken Faltkanalseite analog notwendigen, gleichartigen Funktionselemente sind der Übersichtlichkeit halber in den Zeichnungen weggelassen.

Gemäß Figur 3 ist der anfängliche Einlauf des Teigbandes 1 in den Faltkanal 4 erfolgt, die Einlauf-Führungsmittel 15 sind vom Teigband 1 gelöst und nach unten gekippt, und der stationäre Teigband-Faltungsprozess ist ermöglicht. Befindet sich gemäß Figur 3 die Gelenkbuchse 22a mit dem daran angelenkten Faltkanal-Ausgang in einer Umkehrstellung etwa unterhalb der Zuführeinrichtung 2, nimmt der Faltkanal 4 eine erste, maximale Neigung bzw. minimalen spitzen Winkel gegenüber der Ausgangsführung 21a ein. Das zur Faltkanal-Eingangsführung gehörige Schwenklager 8a auf der Gelenkhülse 10a befindet sich in einer ersten, untersten Stellung bezüglich der Führungsstange 11a, die ebenfalls zur Faltkanal-Eingangsführung gehört. Gemäß Figur 4 hat der Faltkanal-Ausgang bzw. die ihn an der Ausgangs-Führungsstange 23a führende Gelenkbuchse 22a eine Mittelstellung eingenommen, wobei der Faltkanal etwa vertikal beziehungsweise senkrecht zur Ablage 5 ausgerichtet ist. In der in Figur 5 dargestellten Stellung befindet sich der Faltkanal an der zu Figuren 2 und 3 entgegengesetzten, anderen Umkehrstelle, wobei die Gelenkhülse 10a mit Schwenklager 8a und dem Faltkanal-Eingang wiederum eine zweite, unterste Stellung bezüglich der Führungsstange 11a beziehungsweise der Zuführeinrichtung 2 eingenommen haben. In den Figuren 4 und 5 ist ferner erkennbar, dass zur Vermeidung von Teigbanddehnungen und -spannungen eine Speicherung von losem, schlaffem Teigband-Vorrat in Form einer U-artig oder wellenartig durchhängenden Teigbandlose 26 zwischen dem Ausgang der Zuführeinrichtung 2 und dem Eingang des Faltkanals 4 erfolgt ist. Eine solche Bildung von losem Teigbandvorrat 26 ergibt sich vor allem dann, wenn aufgrund seiner durch die lineare Hin- und Herbewegung 6 des Faltkanalausgangs bedingten Ausgleichsbewegungen der Faltkanaleingang längs der Führungsstangen 11a, 11b dem Ausgang der Zuführeinrichtung 2 nach Figuren 4 und 5 näher kommt als nach Figuren 2 und 3.

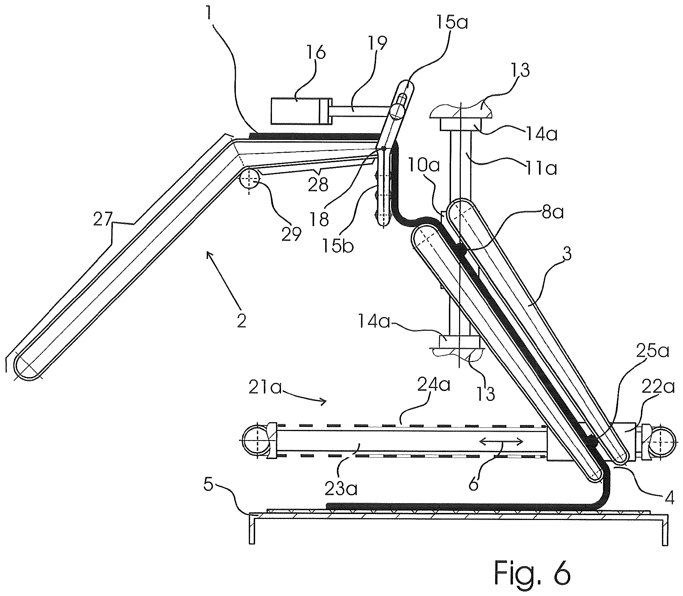

Die in Figur 6 gezeigte Stellung entspricht der nach Figur 5, wobei die Zuführeinrichtung 2 eingangsseitig noch um einen Steigabschnitt 27 ergänzt ist, der mit ihrem Ausgangsabschnitt 28 über eine Umlenkrolle 29 einen stumpfen Winkel einschließt. Indem der Steigabschnitt 27 das Teigband 1 auf ein dem Eingang des Faltkanals 4 entsprechendes Höhenniveau befördert, ergibt sich für das Teigband durch den Faltkanal 4 ausreichend Fallhöhe bzw. ein funktionsgerechter Höhenunterschied zur Ablage 5. Eine wesentliche Funktion des Steigabschnitts 27 besteht also darin, das Teigband 1 von der üblichen Höhe der Verarbeitungstische zum höher gelegenen Faltkanal-Eingang zu transportieren

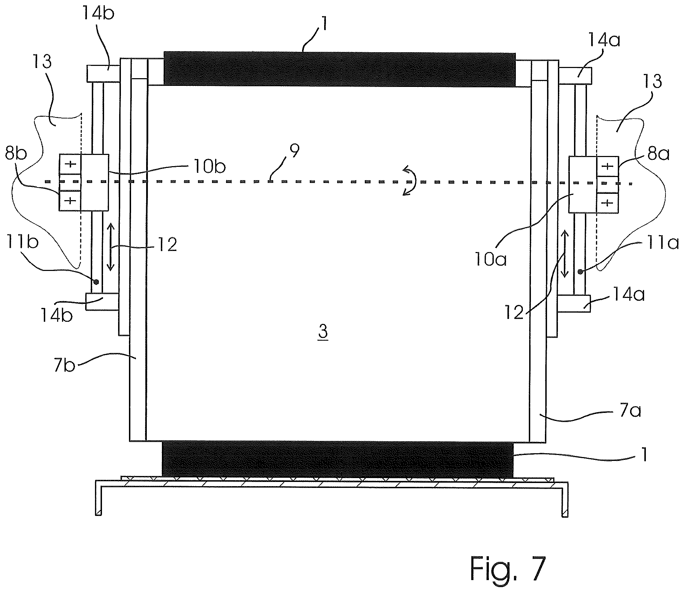

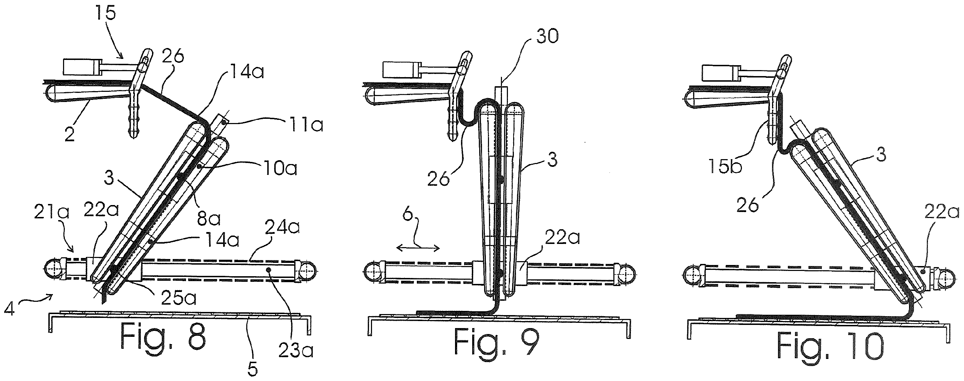

Das Ausführungsbeispiel nach Figur 7 unterscheidet sich von dem nach Figur 1 dadurch, dass der Faltkanal 3 zumindest in seinem Eingangsbereich mit einer Faltkanal-Eingangsführung starr verbunden ist, die gelenkig am Maschinenrahmen oder -fundament 13 angebracht ist. Dazu sind die beidseitigen Faltkanal-Rahmenteile 7a, 7b mit je einer Führungsstange 11a, 11b starr bzw. fest über jeweilige Haltevorsprünge 14a, 14b der Rahmenteile 7a, 7b verbunden, indem die Haltevorsprünge 14a, 14b die Führungsstangen 11a, 11b stirnseitig umfassen und fixieren. Als beidseitige Gelenkstellen für den Faltkanal 3 bzw. dessen Eingangsführung ist je ein Schwenklager 8a, 8b ortsfest am Maschinenrahmen 13 fixiert. Zur Kopplung des Faltkanals 3 mit den Schwenklagern 8a, 8b umfasst die Faltkanal-Eingangsführung neben den Führungsstangen 11a, 11b noch daran hin- und herverschiebbare Gelenkhülsen 10a, 10b, die im jeweiligen Schwenklager 8a, 8b drehbar gelagert sind. Die durch letztere gemeinsam gebildete Dreh- bzw. Schwenkachse 9 ist (anders als nach Figur 1) bei diesem Ausführungsbeispiel nach Figur 7 zusammen mit den darin drehbar gelagerten Gelenkhülsen 10a, 10b ortsfest, ihr kann keine Verschiebebewegung 12 entlang der Führungsstangen 11a, 11b erteilt werden. Stattdessen machen nun die Führungsstangen 11a, 11b aufgrund ihrer starren Verbindungen mit dem Faltkanal 3 bzw. dessen Außen- bzw. Längsseiten die Äquivalent- bzw. Ausgleichsbewegungen des Faltkanals 3 insbesondere in dessen Eingangsbereich mit. Letzteres ergibt sich aus einer vergleichenden Betrachtung der Figuren 8-13.

Die Figuren 8-10 zeigen unterschiedliche Stellungen des Faltkanals 3. Nach Figur 8 befindet sich der Faltkanalausgang 4 im Bereich einer Umkehrstelle etwa unterhalb der Zuführeinrichtung 2. Die mittlere Längsachse 30 des Faltkanals 3 sowie die Führungsstange 11a, die damit etwa deckungsgleich verläuft, haben gegenüber der Horizontalen bzw. der Ausgangsführung 21a bzw. der Oberfläche der Teigbandablage 5 eine schräg geneigte Stellung, bei der sie mit letzteren einen spitzen Winkel einschließen. Die Teigbandlose 26 ist in der Umkehrstellung nach Figur 8 zu einem weitgehend geradlinigem Strang gestreckt, wobei jedoch Zugspannungen innerhalb der Teigbandmasse aufgrund vorher ausreichend zur Verfügung gestellten losen, bzw. schlaffen Teigbandvorrats vermieden sind. Gemäß Figur 9 befindet sich der Faltkanal 3 in einer vertikalen Stellung senkrecht zur Teigband-Ablage 5, wobei sich die Teigbandlose 26 in ihrer Form zu einem U-artigen Durchhang bzw. zu einem Wellental verändert hat. Dies rührt daher, dass der Faltkanal mit seinem Eingangsbereich aufgrund von Äquivalent- bzw. Ausgleichsbewegungen seinen Abstand zum Ausgang der Zuführeinreichung 2 im Vergleich zu Figur 8 vermindert hat. Im anderen Umkehrbereich nach Figur 10 hat der Faltkanal 3 nun eine zur Stellung nach Figur 8 gegensinnig geneigte Haltung mit einem gegensinnig schrägen bzw. spitzen Winkel zur Oberfläche der Teigbandablage 5 eingenommen. Der Eingangsbereich des Faltkanals 3 hat wiederum seinen Abstand bzw. seine Stellung zur ortsfesten Zuführeinrichtung 2 verändert, woraus sich auch eine veränderte Form für die Teigbandlose 26 mit einem im Vergleich zur Figur 9 enger geformten U-Profil bzw. Wellental und einem gegenüber Figur 9 längeren vertikalen Abschnitt entlang dem Rollenabschnitt 15b der Einlaufführungsmittel 15. Im Bewegungsablauf nach Figuren 8-10 ist die Ausgangs-Gelenkbuchse 22a von einem ersten bzw. linken Totpunkt im entsprechenden Endbereich der Ausgangsführung 21a über eine Mittelstellung innerhalb der Ausgangsführung 21a (mit vertkal gestelltem Faltkanal 3 - Figur 9) zu einem zweiten bzw. rechten Totpunkt (Umkehrstellung) nach Figur 10 verschoben worden und hat dabei den Faltkanalausgang 4 mitgenommen. Demgegenüber sind das (Eingangs-)Schwenklager 8a und die darin drehbar gelagerte Gelenkhülse 10a ortsfest und damit in ihrem Abstand gegenüber dem Ausgang der Zuführeinrichtung 2 unveränderlich angeordnet. Die mit der Mittellängsachse 30 des Faltkanals 3 im wesentlichen deckungsgleiche Führungsstange 11 wird im Zuge des Bewegungsablaufs nach Figuren 8-10 in ihrer Winkelstellung um das ortsfeste (Eingangs-)Schwenklager 8a verschwenkt.

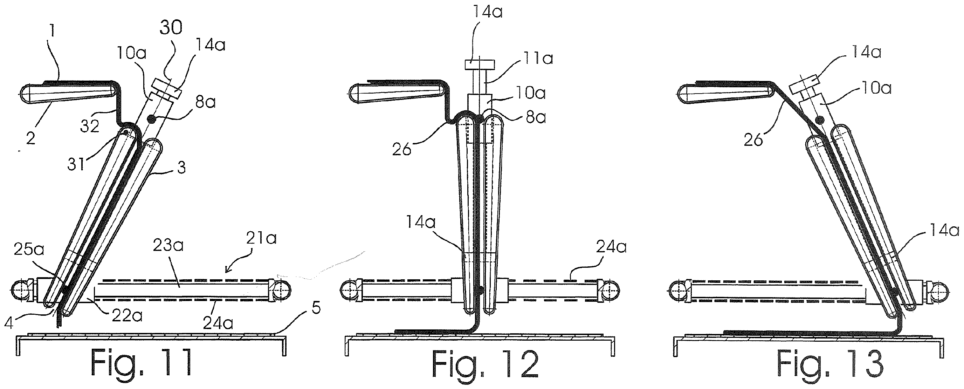

Gemäß Figuren 11-13 lässt sich ein Faltbetrieb auch ohne Einlauf-Führungsmittel einleiten, wie sich insbesondere aus der Teigband-Einführstellung gemäß Figur 11 ergibt. Bei dieser befindet sich der Faltkanalausgang 4 unterhalb der Zuführeinrichtung 2 in einer Umkehrstelle (Totpunkt) innerhalb der Ausgangsführung 21a. Das im Faltkanal-Eingangsbereich befindliche (obere) Schwenklager 8a ist mit seiner darin drehbaren Gelenkhülse 10a in Relation zum Ausgang der Zuführeinrichtung 2 derart platziert, dass in der genannten, schräg verlaufenden Umkehrstellung des Faltkanals 3 wenigstens eine Eingangsstelle 31 im Faltkanal-Eingangsbereich so unterhalb des Zuführeinrichtungs-Ausgangs liegt, dass die Eingangsstelle 31 mit dem Ausgang der Zuführeinrichtung 2 eine vertikale Flucht, senkrecht auf die Teigbandablage 5 treffend, bilden. Längs dieser vertikalen Flucht verläuft ein schlaffer, weitgehend geradliniger Teigbandabschnitt bzw. eine vertikale Teigbandlose 32. Das Ende dieses losen Abschnitts trifft dann auf die Eingangsstelle 31 des Faltkanals 3, beispielsweise eines der beidseitigen Faltkanal-Förderbänder. Das geradlinige, schlaffe Herunterhängen des Teigbandes zwischen Zuführeinrichtungsausgang und Faltkanaleingang ergibt sich durch die Schwerkraft bzw. dem Eigengewicht des losen Teigbandabschnitts.

In der vertikalen Mittelstellung des Faltkanals 3 gemäß Figur 12 hat sich die Führungsstange 11a durch die drehbar ortsfeste Gelenkhülse 10a hindurch nach oben verschoben, so dass die Führungsstange 11a mit dem daran befestigten Haltevorsprung 14a aus der Führungshülse 10a nach oben weiter heraussteht als wie nach Figur 11 oder Figur 13. Dies ist einerseits durch die ortsfeste Anbringung des oberen (Eingangs-)Schwenklagers 8a und der darin drehbar gelagerten Gelenkhülse 10a und andererseits durch das Verschieben des Faltkanalausgangs 4 von der schrägen Umkehrstellung gemäß Figur 11 (oder auch gemäß Figur 13) in die senkrechte Mittelstellung gemäß Figur 12 bedingt.

### Bezugszeichenliste

- 1: Teigband
- 2: Zuführeinrichtung
- 3: Faltkanal
- 4: Faltkanal-Ausgang
- 5: Teigband-Ablage
- 6: Hin- und Herbewegung
- 7a, 7b: Rahmenteil
- 70a, 70b: Lageraufnahme
- 8a, 8b: Schwenklager
- 80a, 80b: Außenring
- 81a, 81b: Lagerzapfen
- 9: Schwenkachse
- 10a, 10b: Gelenkhülse
- 11a, 11b: Führungsstange
- 12: Verschiebebewegung
- 13: Maschinenrahmen
- 14a, 14b: Haltevorsprung
- 15: Einlauf-Führungsmittel
- 15a: Hebelabschnitt
- 15b: Rollenabschnitt
- 16: Stellorgan
- 17: Kippbewegung
- 18: Kippachse
- 19: Stellkolben
- 20: nicht besetzt
- 21a: Ausgangsführung
- 22a: Ausgangs-Gelenkbuchse
- 23a: Ausgangs-Führungsstange
- 24a: Zahnriementrieb
- 25a: Ausgangsschwenklager
- 26: Teigbandlose
- 27: Eingangs-Steigabschnitt
- 28: Ausgangsabschnitt
- 29: Umlenkrolle
- 30: mittlere Längsachse des Faltkanals
- 31: Eingangsstelle
- 32: Vertikale Teigbandlose

## Patentansprüche

1. Verfahren zum Überlappen, Falten und/oder Schichten eines Teigbandes (1), indem dieses von einer Zuführeinrichtung (2) über deren Ausgang durch einen Faltkanal (3) mit einem Eingang (31) und einem Ausgang (4) auf wenigstens eine Ablage (5) abgelegt wird, indem der Ausgang des Faltkanals (3) über die Ablage (5) hin- und hergehend geführt wird, und dabei das Teigband (1) sich zumindest teilweise überlappend auf die Ablage (5) gelegt wird, wobei der Abstand zwischen dem Faltkanal-Ausgang (4) und der Ablage (5) konstant gehalten wird, wobei der Abstand der Zuführeinrichtung (2) zur Ablage (5) konstant gehalten wird, **dadurch gekennzeichnet, dass** der Eingang des Faltkanals (3) gegenüber dem Ausgang der Zuführeinrichtung (2) zur Ausführung von Äquivalent- und/oder Ausgleichsbewegungen derart geführt wird, dass die Länge des Teigbandes von der Zuführeinrichtung (2) zur Ablage (5) konstant oder im wesentlichen konstant gehalten wird.

2. Verfahren nach Anspruch 1, **dadurch gekennzeichnet, dass** zur Realisierung der Äquivalent- und/oder Ausgleichsbewegungen die Stellung des Faltkanal-Eingangs relativ zum Zuführeinrichtungs-Ausgang verändert wird.

3. Verfahren nach Anspruch 1 oder 2, **dadurch gekennzeichnet, dass** im Zuge der Äquivalent- und/oder Ausgleichsbewegungen der Faltkanal-Eingang mit einem ständigen und/oder veränderlichen Abstand zum Zuführeinrichtungs-Ausgang geführt oder gehalten wird.

4. Verfahren nach einem der vorangehenden Ansprüche, **dadurch gekennzeichnet, dass** der Einlauf des Teigbandes (1) von der Zuführeinrichtung (2) in den Faltkanal (3) durch Einlauf-Führungsmittel (15) unterstützt wird, mittels welcher das Teigband (1) unter- und/oder hintergriffen wird.

5. Verfahren nach einem der vorangehenden Ansprüche, **gekennzeichnet durch** eine Führung des Faltkanals (3)oder Faltkanal-Eingangs in eine Teigband-Einführstellung, in welcher das Teigband (1) vom Ausgang der Zuführeinrichtung (2) mittels Schwerkraft in den Faltkanal-Eingang gelangt.

6. Verfahren nach einem der vorangehenden Ansprüche, **gekennzeichnet durch** eine zumindest zeitweise Bildung und/oder Speicherung einer Teigbandlose (26) oder eines sonstigen losen Teigbandvorrats beispielsweise in Form eines Teigband-Durchhangs in der Zuführeinrichtung (2) und/oder zwischen dem Zuführeinrichtungs-Ausgang und dem Faltkanal-Eingang

7. Verfahren nach Anspruch 6, **dadurch gekennzeichnet, dass** die Länge und/oder das Ausmaß des Durchhangs des Teigbandvorrats oder der Teigbandlose (26) sensorisch erfasst und überwacht werden.

8. Anordnung zum Überlappen, Falten und/oder Schichten eines Teigbandes (1), insbesondere zur Durchführung des Verfahrens nach einem der vorangehenden Ansprüche, mit einer Teigband-Zuführeinrichtung (2), deren Ausgang einem Eingang (31) eines Faltkanals (3) gegenüberliegt und/oder sonst zugeordnet ist, dessen Ausgang (4) sich über einer Ablage (5) für das zu überlappende, zu faltende oder zu schichtende Teigband (1) befindet und mit einer Faltkanal-Ausgangsführung (21a) gekoppelt ist, über welche der Faltkanal-Ausgang (4) mit konstantem Abstand zur Ablage (5) hin und her bewegbar ist, wobei die Zuführeinrichtung (2) zumindest relativ zur Ablage (5) ortsfest angeordnet oder gehalten ist, **dadurch gekennzeichnet, dass** und der Faltkanal (3) mit seinem Eingang (31) mit einer Faltkanal-Eingangsführung (10a,10b,11a,11b) in Eingriff steht und/oder sonst gekoppelt ist, welche dazu ausgebildet ist, dem Faltkanal (3) wenigstens an seinem Eingang (31) Ausgleichsbewegungen derart zu erteilen, dass die Länge des Teigbandes (1) von der Zuführeinrichtung(2) zur Ablage (5) konstant oder im wesentlichen konstant gehalten wird.

9. Anordnung nach Anspruch 8, **dadurch gekennzeichnet, dass** die Faltkanal-Eingangsführung (10a,10b,11a,11b) ausgebildet ist, den Faltkanal-Eingang (31) im Zuge seiner Ausgleichsbewegungen im Abstand vom Ausgang der Zuführeinrichtung zu halten.

10. Anordnung nach Anspruch 8 oder 9, **dadurch gekennzeichnet, dass** die Faltkanal-Eingangsführung (10a,10b,11a,11b) zeitweise oder ständig kongruent mit einer Längs- oder Mittelachse (30) des Faltkanals (3) und/oder in deren Verlängerung angeordnet ist.

11. Anordnung nach einem der Ansprüche 8 bis 10, **dadurch gekennzeichnet, dass** die Faltkanal-Eingangsführung (10a,10b,11a,11b) einen vorzugsweise geradlinigen Führungsstrang (11a,11b) mit einer Führungsrichtung senkrecht oder schräg zur Ablage (5) sowie ein damit verschiebbar in Eingriff stehendes Führungselement (10a,10b) umfasst, an dem eine Dreh- oder Schwenklagerung (8a,8b) angebracht ist.

12. Anordnung nach Anspruch 11, **dadurch gekennzeichnet, dass** der Führungsstrang (11a,11b) ortsfest ist, und das Führungselement (10a,10b) daran entlang versetzbar und über die Dreh- oder Schwenklagerung (a,8b) mit dem Faltkanal (3) verbunden ist.

13. Anordnung nach Anspruch 11, **dadurch gekennzeichnet, dass** die Dreh- oder Schwenklagerung (8a) ortsfest ist und das Führungselement (10a,10b) drehbar hält, und der Faltkanal (3) am Führungsstrang (11a,11b) befestigt ist, welcher mit dem Führungselement bewegbar (12) in Eingriff steht.

14. Anordnung nach einem der Ansprüche 8 bis 13, **dadurch gekennzeichnet, dass** die Zuführeinrichtung (2) eingangseitig eine schräg oder rampenartig ansteigenden Steigabschnitt (27) aufweist, der über einen stumpfen Winkel oder Knick in einen in Förderrichtung folgenden, horizontalen Ausgangsabschnitt (28) übergeht.

15. Anordnung nach einem der Ansprüche 8 bis 14, **dadurch gekennzeichnet, dass** der Faltkanal (3) und/oder der Faltkanal-Ausgang (4) mit mit einem Linearantrieb (24a) gekoppelt sind, dessen Antriebsrichtung parallel zur Ablage (5) oder Faltkanal-Ausgangsführung (21a) ausgerichtet ist.

16. Anordnung nach einem der Ansprüche 8 bis 15, **dadurch gekennzeichnet. dass** zwischen dem Ausgang der Zuführeinrichtung (2) und dem Faltkanal-Eingang (31) oder in einem gemeinsamen Bereich beider Einlauf-Führungsmittel (15) angeordnet sind, die zum Unter- und/oder Hintergreifen des Teigbandes (1) ausgebildet sind.

## Claims

1. A method for overlapping, folding and/or layering a sheet of dough (1) by the latter being set down by a feeding device (2) via its outlet through a folding channel (3) with an input (31) and an output (4) on at least one tray (5), the output of the folding channel (3) being guided moving to and fro over the tray (5), and the sheet of dough (1) being placed on the tray (5) at least partially overlapping, the distance between the folding channel output (4) and the tray (5) being kept constant, the distance between the feeding device (2) and the tray (5) being kept constant, **characterised in that** the input of the folding channel (3) is guided with respect to the outlet of the feeding device (2) in order to perform equivalent and/or compensating movements such that the length of the sheet of dough from the feeding device (2) to the tray (5) is kept constant or substantially constant.

2. The method according to Claim 1, **characterised in that** in order to implement the equivalent and/or compensating movements, the position of the folding channel input relative to the feeding device outlet is changed.

3. The method according to Claim 1 or 2, **characterised in that** in the course of the equivalent and/or compensating movements the folding channel input is guided or kept with a constant and/or variable distance from the feeding device outlet.

4. The method according to any of the preceding claims, **characterised in that** the infeed of the sheet of dough (1) from the feeding device (2) into the folding channel (3) is supported by infeed guide means (15) by means of which the sheet of dough (1) is grasped from below and/or behind.

5. The method according to any of the preceding claims, **characterised by** a guide of the folding channel (3) or folding channel input into an insertion position of the sheet of dough in which the sheet of dough (1) passes from the outlet of the feeding device (2) into the folding channel input by means of the force of gravity.

6. The method according to any of the preceding claims, **characterised by** at least temporary formation and/or storage of a batch of dough (26) or some other loose supply of dough, for example in the form of a slack sheet of dough in the feeding device (2) and/or between the feeding device outlet and the folding channel input.

7. The method according to Claim 6, **characterised in that** the length and/or the dimensions of the slack sheet of dough supplied or of the batch of dough (26) is detected by sensors and monitored.

8. A system for overlapping, folding and/or layering a sheet of dough (1), in particular for implementing the method according to any of the preceding claims, with a device (2) for feeding a sheet of dough, the outlet of which lies opposite an input (31) of a folding channel (3) and/or is allocated otherwise, the output (4) of which is located over a tray (5) for the sheet of dough (1) to be overlapped, to be folded or to be layered, and being coupled to a folding channel output guide (21a) by means of which the folding channel output (4) can be moved to and fro a constant distance away from the tray (5), the feeding device (2) being positioned stationarily or being held at least relative to the tray (5), **characterised in that** the folding channel (3) with its input (31) engages with a folding channel input guide (10a, 10b, 11a, 11b) and/or is coupled in some other way, which input guide is designed to allow the folding channel (3) to make compensating movements, at least at its input (31), such that the length of the sheet of dough (1) from the feeding device (2) to the tray (5) is kept constant or substantially constant.

9. The system according to Claim 8, **characterised in that** the folding channel input guide (10a, 10b, 11a, 11b) is designed to keep the folding channel input (31) a distance away from the outlet of the feeding device in the course of its compensating movements.

10. The system according to Claim 8 or 9, **characterised in that** the folding channel input guide (10a, 10b, 11 a, 11b) is temporarily or constantly congruent with a longitudinal or centre axis (3) of the folding channel (3) and/or is located in its extension.

11. The system according to any of Claims 8 to 10, **characterised in that** the folding channel input guide (10a, 10b, 11a, 11b) comprises a preferably straight guide strand (11a, 11b) with a guide direction perpendicular or at an angle to the tray (5) and a guide element (10a, 10b) that engages displaceably with the latter and to which a rotary or pivot bearing (8a, 8b) is attached.

12. The system according to Claim 11, **characterised in that** the guide strand (11a, 11b) is stationary, and the guide element (10a, 10b) can be offset along the latter and is connected to the folding channel (3) by the rotary or pivot bearing (8a, 8b).

13. The system according to Claim 11, **characterised in that** the rotary or pivot bearing (8a) is stationary and holds the guide element (10a, 10b) rotatably, and the folding channel (3) is fastened to the guide strand (11a, 11b) which can engage moveably with the guide element (12).

14. The system according to any of Claims 8 to 13, **characterised in that** the feeding device (2) has on the inlet side a rising section (27) that rises at an angle or like a ramp and which passes via an obtuse angle or kink into a horizontal output section (28) that follows the direction of conveyance.

15. The system according to any of Claims 8 to 14, **characterised in that** the folding channel (3) and/or the folding channel output (4) is/are coupled to a linear drive (24a), the drive direction of which is aligned parallel to the tray (5) or folding channel output guide (21a).

16. The system according to any of Claims 8 to 15, **characterised in that** there are located between the outlet of the feeding device (2) and the folding channel input (31) or in a common region of both infeed guide means (15) which are formed for grasping the sheet of dough (1) from beneath and/or from behind.

## Revendications

1. Procédé pour le chevauchement, le pliage et/ou la mise en couches d'une bande de pâte (1), laquelle est guidée à partir d'un dispositif d'alimentation (2) selon la sortie de celui-ci par un canal de pliage (3) ayant une entrée (31) et une sortie (4) au-dessus d'au moins un plateau (5), laquelle est conduite en va et vient sur le plateau (5) par la sortie du canal de pliage (3), et la bande de pâte (1) se chevauchant au moins partiellement sur le plateau (5), dans lequel l'espacement entre la sortie (4) du canal de pliage et le plateau (5) est maintenu constant, dans lequel l'espacement entre le dispositif d'alimentation (2) et le plateau (5) est maintenu constant, **caractérisé en ce que** l'entrée du canal de pliage (3) opposée à la sortie du dispositif d'alimentation (2) est guidée pour exécuter des mouvements équivalents et/ou de compensation, de telle sorte que la longueur de la bande de pâte depuis le dispositif d'alimentation (2) jusqu'au plateau (5) est maintenue constante ou sensiblement constante.

2. Procédé selon la revendication 1, **caractérisé en ce que** pour la réalisation des mouvements équivalents et/ou de compensation la position de l'entrée du canal de pliage est modifiée par rapport à la sortie du dispositif d'alimentation.

3. Procédé selon la revendication 1 ou 2, **caractérisé en ce que** au cours des mouvements équivalents et/ou de compensation l'entrée du canal de pliage est guidée ou maintenue à une distance constante et/ou variable par rapport à la sortie du dispositif d'alimentation.

4. Procédé selon l'une quelconque des revendications précédentes, **caractérisé en ce que** l'entrée de la bande de pâte (1) à partir du dispositif d'alimentation (2) dans le canal de pliage (3) est supportée par des moyens de guidage d'entrée (15), au moyen desquels la bande de pâte (1) est prise en charge par dessous et/ou par derrière.

5. Procédé selon l'une quelconque des revendications précédentes, **caractérisé par** un guidage du canal de pliage (3) ou de l'entrée du canal de pliage dans une étape d'insertion de la bande de pâte, dans lequel la bande de pâte (1) pénètre dans l'entrée du canal de pliage depuis la sortie du dispositif d'alimentation (2) au moyen de la pesanteur.

6. Procédé selon l'une quelconque des revendications précédentes, **caractérisé par** une formation et/ou un stockage au moins temporaire d'une dose de bande de pâte (26) ou par une autre alimentation lâche en bande de pâte par exemple sous forme d'un affaissement de bande de pâte dans le dispositif d'alimentation (2) et/ou entre la sortie du dispositif d'alimentation et l'entrée du canal de pliage.

7. Procédé selon la revendication 6, **caractérisé en ce que** la longueur et/ou la mesure de l'affaissement de l'alimentation de pâte ou de la dose de bande de pâte (26) sont détectées et surveillées par des capteurs.

8. Dispositif pour le chevauchement, le pliage et/ou la mise en couches d'une bande de pâte (1), en particulier pour la mise en oeuvre du procédé selon l'une quelconque des revendications précédentes, avec un dispositif d'alimentation en bande de pâte (2) dont la sortie est opposée et/ou associée autrement à une entrée (31) d'un canal de pliage (3), laquelle sortie (4) est située au-dessus d'un plateau (5) pour la bande de pâte (1) à chevaucher, à plier ou à mettre en couches et est couplée avec un guidage de sortie de canal de pliage (21a) par lequel la sortie (4) du canal de pliage est déplaçable en va-et-vient et maintenue à une distance constante du plateau (5), dans lequel le dispositif d'alimentation (2) est disposé au moins stationnaire ou fixe par rapport au plateau (5), **caractérisé en ce que** le canal de pliage (3) avec son entrée (31) est en prise ou autrement accouplé avec un guidage d'entrée de canal de pliage (10a, 10b, 11a, 11b), qui est adapté au canal de pliage (3) au moins selon son entrée (31) pour fournir des mouvements de compensation de telle sorte que la longueur de la bande de pâte (1) depuis le dispositif d'alimentation (2) jusqu'au plateau (5) soit maintenue constante ou sensiblement constante.

9. Dispositif selon la revendication 8, **caractérisé en ce que** le guide d'entrée du canal de pliage (10a, 10b, 11a, 11b) est conçu pour maintenir l'entrée du canal de pliage (31) au cours de ses mouvements de compensation à distance de la sortie du dispositif d'alimentation.

10. Dispositif selon la revendication 8 ou 9, **caractérisé en ce que** le guide d'entrée du canal de pliage (10a, 10b, 11a, 11b) est temporairement ou définitivement congruent avec un axe longitudinal ou médian (30) du canal de pliage (3) et/ou disposé dans son prolongement.

11. Dispositif selon l'une quelconque des revendications 8 à 10, **caractérisé en ce que** le guide d'entrée du canal de pliage (10a, 10b, 11a, 11b) comporte un volet de guidage (11a, 11b) de préférence rectiligne avec une direction de guidage perpendiculaire ou oblique par rapport au plateau (5), ainsi qu'un élément de guidage (10a, 10b) monté déplaçable et en prise par rapport à celui-ci et sur lequel est monté un palier de rotation ou de pivotement (8a, 8b).

12. Dispositif selon la revendication 11, **caractérisé en ce que** le volet de guidage (11a, 11b) est fixe, et l'élément de guidage (10a, 10b) est déplaçable longitudinalement et autour du palier de rotation ou de pivotement (a, 8b) associé au canal de pliage (3).

13. Dispositif selon la revendication 11, **caractérisé en ce que** le palier de rotation ou de pivotement (8a) est fixe, et l'élément de guidage (10a, 10b) est monté rotatif, et le canal de pliage (3) est monté sur le volet de guidage (11a, 11b), lequel est en prise de façon mobile sur l'élément de guidage (12).

14. Dispositif selon l'une quelconque des revendications 8 à 13, **caractérisé en ce que** le dispositif d'alimentation (2) présente selon son côté d'entrée une section montante oblique ou en rampe (27) qui se raccorde par l'intermédiaire d'un angle obtus ou d'une courbure à une coupe de sortie (28) selon la direction de transport et horizontale.

15. Dispositif selon l'une quelconque des revendications 8 à 14, **caractérisé en ce que** le canal de pliage (3) et/ou la sortie du canal de pliage (4) est couplé avec un entraînement linéaire (24a), dont la direction d'entraînement est parallèle au plateau (5) ou au guidage de sortie de canal de pliage (21a).

16. Dispositif selon l'une quelconque des revendications 8 à 15, **caractérisé en ce que** entre la sortie du dispositif d'alimentation (2) et l'entrée du canal de pliage (31) ou dans un espace commun l'un et l'autre des moyens de guidage d'entrée et de sortie (15) sont couplés, lesquels sollicitent la bande de pâte (1) par-dessous et/ou par l'arrière.
